# EUROPEAN PATENT APPLICATION

(11) **EP 3 486 815 A1**
(43) Date of publication of application: **22.05.2019**
(21) Application number: 18214442.8
(22) Date of filing: 31.07.2014
(51) Int. Cl.: G06F 17/50, G06T 19/00, G01B 11/25, G06F 3/01, H04N 9/31

(54) **MODEL DATA OF AN OBJECT DISPOSED ON A MOVABLE SURFACE**

(62) Divisional of application: 14898760.5
(71) Applicant: Hewlett-Packard Development Company, L.P., Spring TX 77389 (US)
(72) Inventor: KANG, Jinman, San Diego, CA California 92127-1899 (US)
(74) Representative: Haseltine Lake LLP

(57) **Abstract**

A computing system includes a movable surface (210) and a model acquisition engine (170) configured to acquire three-dimensional model data representing a first object disposed on the movable surface (210). The computing system also includes a communication engine (172) to send the model data to another computing system and to receive from the other computing system manipulation data associated with the model data. The computing system further includes a movement and projection engine (174) to move the movable surface (210) in accordance with the received manipulation data.

## Description

### BACKGROUND

Many computing systems include at least one display and at least one input device, such as a mouse, a keyboard, a touchpad, or the like. Many computing systems are also connected to local or global networks such as the Internet, allowing users to communicate and collaborate on design, development, and other types of projects.

### BRIEF DESCRIPTION OF THE DRAWINGS

The following detailed description references the drawings, wherein:
FIG. 1 is a schematic perspective view of an example computing system;
FIG. 2 is another schematic perspective view of the example computing system of FIG. 1;
FIG. 3 is a schematic side view of the example computing system of FIG. 1;
FIG. 4 is a schematic front view of the example computing system of FIG. 1;
FIG. 5 is a schematic side view of the example computing system of FIG. 1 during an example operation;
FIG. 6 is a schematic front view of the example computing system of FIG. 1 during another example operation;
FIG. 7 is a block diagram of an example of a portion of the computing system of FIG. 1;
FIG. 8A illustrates an example of two computing systems communicating through a network;
FIG. 8B illustrates another example of two computing systems communicating through a network;
FIG. 8C illustrates yet another example of two computing systems communicating through a network;
FIG. 9 is a block diagram of an example portion of one of the computing systems of FIGS 8A-8C; and
FIG. 10 is a flowchart of an example method, in accordance with some implementations described herein.

### DETAILED DESCRIPTION

Examples described herein may allow users of computing systems communicatively connected through a network to collaborate on projects such as projects involving designing an image to be applied to a three-dimensional object.

Examples described herein may include a computing system that may include a movable surface and a model acquisition engine to acquire three-dimensional model data representing a first object disposed on the movable surface. The computing system may also include a communication engine to send the model data to another computing system and to receive from the other computing system manipulation data associated with the model data. The computing system may further include a movement and projection engine to move the movable surface in accordance with the received manipulation data.

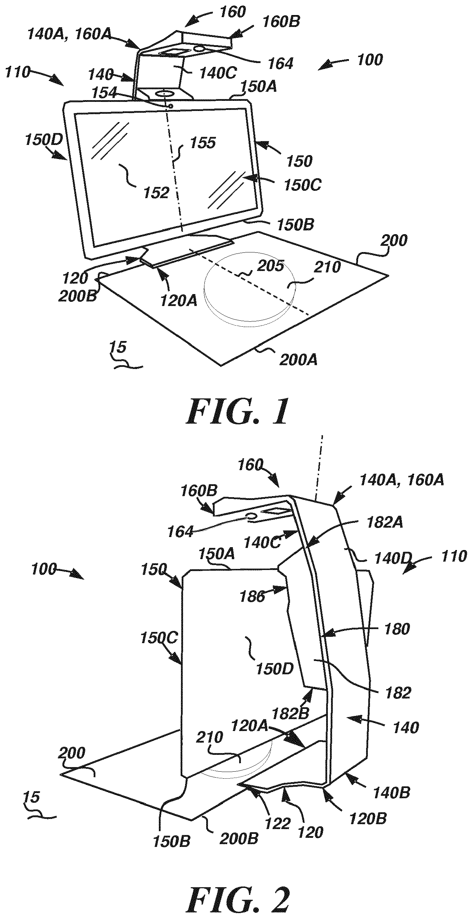

Referring now to the drawings, FIGS. 1-6 are schematic views of an example computing system 100. In the examples of FIGS. 1-6, system 100 may include a support structure 110, a computing device 150, a projector assembly 184, and a surface 200. System 100 may also include a movable surface 210, which, in some examples, may be disposed on surface 200 and may be communicatively connected (e.g., electrically coupled) to computing device 150. System 100 may also include a sensor bundle 164 to capture an image representing an object disposed on top of movable surface 210. Computing device 150 may include a model acquisition engine 170, a communication engine 172, and a movement and projection engine 174, as described below.

Computing device 150 may comprise any suitable computing device complying with the principles disclosed herein. As used herein, a "computing device" may comprise an electronic display device, a smartphone, a tablet, a chip set, an all-in-one computer (e.g., a device comprising a display device that also houses processing resource(s) of the computer), a desktop computer, a notebook computer, workstation, server, any other processing device or equipment, or a combination thereof. In this example, device 150 is an all-in-one computer having a central axis or center line 155, first or top side 150A, a second or bottom side 150B axially opposite the top side 150A, a front side 150C extending axially between sides 150A and 150B, a rear side 150D also extending axially between sides 150A and 150B and generally radially opposite front side 150C. A display 152 is disposed along front side 150C and defines a viewing surface of computing system 100 to display images for viewing by a user of system 100. In examples described herein, a display may include components of any technology suitable for displaying images, video, or the like.

In some examples, display 152 may be a touch-sensitive display. In examples described herein, a touch-sensitive display may include, for example, any suitable technology (e.g., components) for displaying images, video, or the like, and may include any suitable technology (e.g., components) for detecting physical contact (e.g., touch input), such as, for example, a resistive, capacitive, surface acoustic wave, infrared (IR), strain gauge, optical imaging, acoustic pulse recognition, dispersive signal sensing, or in-cell system, or the like. In examples described herein, display 152 may be referred to as a touch-sensitive display 152. Device 150 may further include a camera 154, which may be a web camera, for example. In some examples, camera 154 may capture images of a user positioned in front of display 152. In some examples, device 150 may also include a microphone or other device to receive sound input (e.g., voice input from a user).

In the example of FIGS. 1-6, support structure 110 includes a base 120, an upright member 140, and a top 160. Base 120 includes a first or front end 120A, and a second or rear end 120B. Base 120 may engage with a support surface 15 to support the weight of at least a portion of the components of system 100 (e.g., member 140, unit 180, device 150, top 160, etc.). In some examples, base 120 may engage with support surface 15 in this manner when system 100 is configured for operation. In the example of FIGS. 1-6, front end 120A of base 120 includes a raised portion 122 that may be disposed above and separated from support surface 15 (creating a space or clearance between portion 122 and surface 15) when base 120 is disposed on support surface 15 as illustrated in FIG. 2, for example. In such examples, a portion of a side of Surface 200 may be disposed in (e.g., received within) the space formed between portion 122 and surface 15. In such examples, placing a portion of surface 200 within the space created by portion 122 and surface 15 may assist with the proper alignment of surface 200. In other examples, other suitable methods or devices may be used to assist with the alignment of surface 200.

Upright member 140 includes a first or upper end 140A, a second or lower end 140B opposite the upper end 140A, a first or front side 140C extending between the ends 140A and 140B, and a second or rear side 140D opposite the front side 140C and also extending between the ends 140A and 140B. Lower end 140B of member 140 is coupled to rear end 120B of base 120, such that member 140 extends substantially upward from support surface 15.

Top 160 includes a first or proximate end 160A, a second or distal end 160B opposite the proximate end 160A, a top surface 160C extending between ends 160A and 160B, and a bottom surface 160D opposite the top surface 160C and also extending between ends 160A and 160B. Proximate end 160A of top 160 is coupled to upper end 140A of upright member 140 such that distal end 160B extends outward from upper end 140A of upright member 140. As such, in the example shown in FIG. 2, top 160 is supported at end 160A (and not at end 160B), and may be referred to herein as a cantilevered top. In some examples, base 120, member 140, and top 160 may be monolithically formed. In other examples, two or more of base 120, member 140, and top 160 may be formed of separate pieces (i.e., not monolithically formed).

Surface 200 may include a central axis or centerline 205, a first or front side 200A, and a second or rear side 200B axially opposite the front side 200A. In some examples, surface 200 may be a touch-sensitive surface and may comprise any suitable technology for detecting physical contact with surface 200 as touch input. For example, surface 200 may comprise any suitable technology for detecting (and in some examples tracking) one or multiple touch inputs by a user to enable the user to interact, via such touch input, with software being executed by device 150 or another computing device. In examples described herein, surface 200 may be any suitable touch-sensitive planar (or substantially planar) object, such as a touch-sensitive mat, tabletop, sheet, etc. In some examples, surface 200 may be disposed horizontally (or approximately or substantially horizontally). For example, surface 200 may be disposed on support surface 15, which may be horizontal (or approximately or substantially horizontal).

As described above, surface 200 may be aligned with base 120 of structure 110 to assist with proper alignment of surface 200 (e.g., at least during operation of system 100). In the example of FIGS. 1-6, rear side 200B of surface 200 may be disposed between raised portion 122 of base 120 and support surface 15, such that rear end 200B is aligned with front side 120A of base 120 to assist with proper overall alignment of surface 200 (and particularly proper alignment of movable surface 210) with other components of system 100. In some examples, surface 200 may be aligned with device 150 such that the center line 155 of device 150 is substantially aligned with center line 205 of surface 200. In other examples, surface 200 may be differently aligned with device 150.

In some examples, surface 200 and device 150 may be communicatively connected (e.g., electrically coupled) to one another such that user inputs received by surface 200 may be communicated to device 150. Surface 200 and device 150 may communicate with one another via any suitable wired or wireless communication technology or mechanism, such as, for example, WI-FI, BLUETOOTH, ultrasonic technology, electrical cables, electrical leads, electrical conductors, electrical springloaded pogo pins with magnetic holding force, or the like, or a combination thereof. In the example of FIGS. 1-6, exposed electrical contacts disposed on rear side 200B of surface 200 may engage with corresponding electrical pogo-pin leads within portion 122 of base 120 to communicate information (e.g., transfer signals) between device 150 and surface 200 during operation of system 100. In such examples, the electrical contacts may be held together by adjacent magnets (located in the clearance between portion 122 of base 120 and surface 15) to magnetically attract and hold (e.g., mechanically) a corresponding ferrous and/or magnetic material disposed along rear side 200B of surface 200.

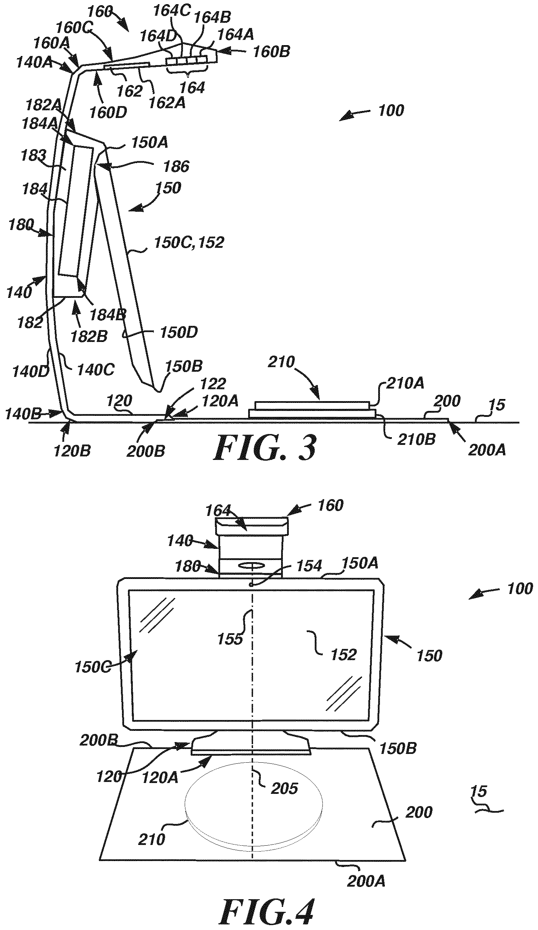

Movable surface 210 may be any type of a surface that can move (e.g., rotate, pivot, shift, and the like) in response to electrical or wireless signals. For example, in some implementations, movable surface 210 may be a turntable that may be rotatable around a central axis of rotation clockwise and/or counterclockwise. For example, as shown in FIG. 3, movable surface 210 may include a circular fixed bottom portion 210B and a circular movable top portion 210A. In some examples, portions 210A and 210B be concentric, and portion 210A may move (e.g., rotate around the central axis) relatively to portion 210B.

As mentioned above, movable surface 210 and computing device 150 may be communicatively connected and movable surface 210 may receive signals from computing device 150. In some examples, movable surface 210 may connected to and receive signals from computing device 150 through a cable. In other examples, movable surface 210 may include a wireless receiver or transceiver to wirelessly communicate with and receive signals from computing device 150 using, for example, WI-FI, BLUETOOTH, infrared, or any other suitable technology. In some examples, movable surface 210 may include a motor (not shown for brevity) which may be controlled by computing device 150. For example, movable surface 210 may be configured to receive from computing device 150 a signal and, based on the signal, rotate clockwise or counterclockwise by a fixed angle or degree. In some examples, as discussed below, an object 40 may be placed or disposed on movable surface 210, in which case object 40 may be moved (e.g., rotated) together with movable surface 210 (e.g., together with movable top portion 210A). Thus, in some examples, computing device 150 may cause the movement (e.g., rotation) of object 40 by sending a corresponding signal to movable surface 210 and causing movable surface to move (e.g., rotate). Object 40 may be, for example, a mug, a smartphone, a book, a document, a photo, or any other physical object.

As shown in FIGS. 1-6, movable surface 210 may be disposed on surface 200. In some examples, movable surface 210 (e.g., fixed bottom portion 210B) may be coupled to (e.g., permanently or semi-permanently attached) to surface 200 at a fixed location, such as the center of surface 200, or anywhere on surface 200 along centerline 205. In other examples, movable surface 210 may not be attached to surface 200 and may be freely removable and displaceable (e.g., by the user) to any position on surface 200. In yet other examples, system 100 may not include surface 200, and movable surface 210 may be positioned anywhere on support surface 15 where movable surface 210 may be projected upon by projector unit 180.

Referring to FIG. 3, projector unit 180 comprises an outer housing 182, and a projector assembly 184 disposed within housing 182. Housing 182 includes a first or upper end 182A, a second or lower end 182B opposite the upper end 182A, and an inner cavity 183. In the example of FIG. 3, housing 182 further includes a coupling or mounting member 186 to engage with and support device 150 (e.g., at least during operation of system 100). Member 186 may be any suitable mechanism or device for suspending and supporting any suitable computing device 150 as described herein. For example, member 186 may comprise a hinge that includes an axis of rotation such that device 150 may be rotated (e.g., by a user) about the axis of rotation to attain a desired angle for viewing display 152. In some examples, device 150 may permanently or semi-permanently attached to housing 182 of unit 180. In some examples, housing 180 and device 150 may be integrally or monolithically formed as a single unit.

Referring to FIG. 4, in some examples, when device 150 is suspended from structure 110 via mounting member 186 on housing 182, projector unit 180 (i.e., both housing 182 and assembly 184) may be substantially hidden behind device 150 when system 100 is viewed from the front (i.e.., substantially facing display 152 disposed on front side 150C of device 150). In addition, as shown in FIG. 4, when device 150 is suspended from structure 110 as described above, projector unit 180 (i.e., both housing 182 and assembly 184) and any image projected thereby may be substantially aligned or centered with respect to center line 155 of device 150 and/or with respect to the center of movable surface 210.

Referring again to FIG. 3, projector assembly 184 is disposed within cavity 183 of housing 182, and includes a first or upper end 184A, a second or lower end 184B opposite the upper end 184A. Upper end 184A is proximate upper end 182A of housing 182 while lower end 184B is proximate lower end 182B of housing 182. Projector assembly 184 may comprise any suitable digital light projector assembly for receiving data from a computing device (e.g., device 150) and projecting image(s) (e.g., out of upper end 184A) that correspond with that input data. For example, in some implementations, projector assembly 184 may comprise a digital light processing (DLP) projector or a liquid crystal on silicon (LCoS) projector which are advantageously compact and power efficient projection engines capable of multiple display resolutions and sizes, such as, for example, standard XGA resolution (1024 x 768 pixels) with a 4:3 aspect ratio, or standard WXGA resolution (1280 x 800 pixels) with a 16:10 aspect ratio. Projector assembly 184 is further communicatively connected (e.g., electrically coupled) to device 150 in order to receive data therefrom and to produce (e.g., project) light and image(s) from end 184A based on the received data. Projector assembly 184 may be communicatively connected to device 150 via any suitable type of electrical coupling, for example, or any other suitable communication technology or mechanism described herein. In some examples, assembly 184 may be communicatively connected to device 150 via electrical conductor(s), WI-FI, BLUETOOTH, an optical connection, an ultrasonic connection, or a combination thereof. In the example of FIGS. 1-6, device 150 is communicatively connected to assembly 184 through electrical leads or conductors (e.g., as described above in relation to surface 200 and base 120) disposed within mounting member 186 such that, when device 150 is suspended from structure 110 through member 186, the electrical leads disposed within member 186 contact corresponding leads or conductors disposed on device 150.

Referring still to FIG. 3, top 160 further includes a fold mirror 162 and a sensor bundle 164. Mirror 162 includes a highly reflective surface 162A that is disposed along bottom surface 160D of top 160 and is positioned to reflect light, image(s), etc., projected from upper end 184A of projector assembly 184 toward surface 200 during operation. Mirror 162 may comprise any suitable type of mirror or reflective surface. In the example of FIGS. 1-6, fold mirror 162 may comprise a standard front surface vacuum metalized aluminum coated glass mirror that acts to fold light emitted from assembly 184 down to movable surface 210 and surface 200. In other examples, mirror 162 may have a complex aspherical curvature to act as a reflective lens element to provide additional focusing power or optical correction.

Sensor bundle 164 includes at least one sensor (e.g., camera, or other type of sensor) to detect, measure, or otherwise acquire data based on the state of (e.g., activities occurring in) a region between sensor bundle 164 and movable surface 210. The state of the region between sensor bundle 164 and movable surface 210 may include object(s) on and/or over movable surface 210, or activities occurring on and/or near movable surface 210. In the example of FIG. 3, bundle 164 includes an RGB camera (or image sensor) 164A, an IR camera (or IR sensor) 164B, a depth camera (or depth sensor) 164C, and an ambient light sensor 164D. In examples described herein, a camera may be referred to as a "sensor".

In some examples, RGB camera 164A may be a camera to capture color images (e.g., at least one of still images and video). In some examples, RGB camera 164A may be a camera to capture images according to the RGB color model, which may be referred to herein as "RGB images". It is appreciated, however, that in other examples, RGB camera 164A may be a camera to capture image according to other color models, such as YUV, YCbCr, RAW, and so forth. In some examples, RGB camera 164A may capture images with relatively high resolution, such as a resolution on the order of multiple megapixels (MPs), for example. As an example, RGB camera 164A may capture color (e.g., RGB) images with a resolution of 14 MPs. In other examples, RBG camera 164A may capture images with a different resolution. In some examples, RGB camera 164A may be pointed toward movable surface 210 and may capture image(s) of movable surface 210, object(s) disposed on movable surface 210, or a combination thereof.

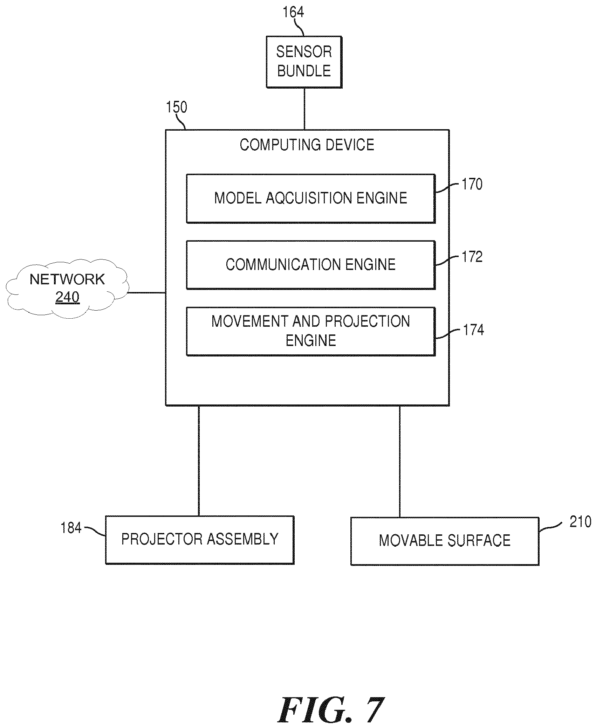

IR camera 164B may be a camera to detect intensity of IR light at a plurality of points in the field of view of the camera 164B. In examples described herein, IR camera 164B may operate in conjunction with an IR light projector 166 (see FIG. 7A) of system 100 to capture IR images. In such examples, each IR image may comprise a plurality of pixels each representing an intensity of IR light detected at a point represented by the pixel. In some examples, top 160 of system 100 may include an IR light projector 166 (see FIG. 7A) to project IR light 167 toward movable surface 210 and surface 200, and IR camera 164B may be pointed toward movable surface 210 and surface 200. In such examples, IR camera 164B may detect the intensity of IR light reflected by movable surface 210, surface 200, object(s) disposed on movable surface 210, or a combination thereof. In some examples, IR camera 164B may exclusively detect IR light 167 projected by IR light projector 166 (e.g., as reflected from movable surface 210, object(s), etc., or received directly).

Depth camera 164C may be a camera (sensor(s), etc.) to detect the respective distance(s) (or depth(s)) of portions of object(s) in the field of view of depth camera 164C. As used herein, the data detected by a depth camera may be referred to herein as "distance" or "depth" data. In examples described herein, depth camera 164C may capture a multi-pixel depth image (e.g., a depth map), wherein the data of each pixel represents the distance or depth (measured from camera 164C) of a portion of an object at a point represented by the pixel. Depth camera 164C may be implemented using any suitable technology, such as stereovision camera(s), a single IR camera sensor with a uniform flood of IR light, a dual IR camera sensor with a uniform flood of IR light, structured light depth sensor technology, time-of-flight (TOF) depth sensor technology, or a combination thereof. In some examples, depth sensor 164C may indicate when an object (e.g., a three-dimensional object) is on movable surface 210. In some examples, depth sensor 164C may detect at least one of the presence, shape, contours, motion, and the respective distance(s) of an object (or portions thereof) placed on movable surface 210.

Ambient light sensor 164D may be arranged to measure the intensity of light in the environment surrounding system 100. In some examples, system 100 may use the measurements of sensor 164D to adjust other components of system 100, such as, for example, exposure settings of sensors or cameras of system 100 (e.g., cameras 164A-164C), the intensity of the light emitted from light sources of system 100 (e.g., projector assembly 184, display 152, etc.), or the like.

In some examples, sensor bundle 164 may omit at least one of sensors 164A-164D. In other examples, sensor bundle 164 may comprise other camera(s), sensor(s), or the like in addition to sensors 164A-164D, or in lieu of at least one of sensors 164A-164D. For example, sensor bundle 164 may include a user interface sensor comprising any suitable device(s) (e.g., sensor(s), camera(s)) for tracking a user input device such as, for example, a hand, stylus, pointing device, etc. In some examples, the user interface sensor may include a pair of cameras which are arranged to stereoscopically track the location of a user input device (e.g., a stylus) or an object placed on movable surface 210. In other examples, the user interface sensor may additionally or alternatively include IR camera(s) or sensor(s) arranged to detect infrared light that is either emitted or reflected by a user input device. In some examples, sensor bundle 164 may include a gesture camera to detect the performance of predefined gestures by object(s) (e.g., hands, etc.). In some examples, the gesture camera may comprise a depth camera and additional functionality to detect, track, etc., different types of motion over time.

In examples described herein, each of sensors 164A-164D of bundle 164 is communicatively connected (e.g., coupled) to device 150 such that data generated within bundle 164 (e.g., images captured by the cameras) may be provided to device 150, and device 150 may provide commands to the sensor(s) and camera(s) of sensor bundle 164. Sensors 164A-164D of bundle 164 may be communicatively connected to device 150 via any suitable wired or wireless communication technology or mechanism, examples of which are described above. In the example of FIGS. 1-6, electrical conductors may be routed from bundle 164, through top 160, upright member 140, and projector unit 180 and into device 150 through leads that are disposed within mounting member 186 (as described above).

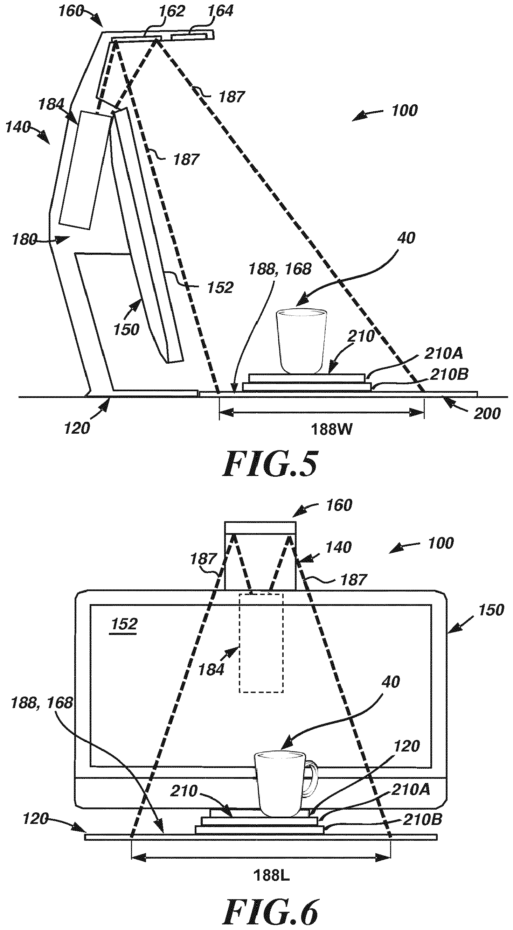

Referring to FIGS. 5 and 6, during operation of system 100, projector assembly 184 may project visible light 187 to reflect off of mirror 162 towards movable surface 210 and surface 200 to thereby display visible image(s) on a projector display space 188 of surface 200, movable surface 210, or any object(s) placed thereupon. In the example of FIGS. 5-6, space 188 may be substantially rectangular, having a length 188L and a width 188W. In some examples, length 188L may be approximately 16 inches, while width 188W may be approximately 12 inches. In other examples, length 188L and width 188W may have different values. In yet other examples, project display space 188 may be circular, elliptical, or have any other shape.

In some examples, cameras of sensor bundle 164 (e.g., cameras 164A-164C) are arranged within system 100 such that the field of view of each of the cameras includes a space 168 of surface 200 that may overlap with some or all of display space 188, or may be coterminous with display space 188. In examples described herein, the field of view of the cameras of sensor bundle 164 (e.g., cameras 164A-164C) may be said to include space 168, though at times surface 200 may be at least partially occluded by object(s) on or over surface 200 or movable surface 210, such as object 40. In such examples, the object(s) on or over surface 200 or movable surface 210 may be in the field of view of at least one of cameras 164A-164C. In such examples, sensors of sensor bundle 164 may acquire data based on the state of (e.g., activities occurring in, object(s) disposed in) a region between sensor bundle 164 and space 168 of surface 200. In some examples, both space 188 and space 168 coincide or correspond with movable surface 210 such that functionalities of movable surface 210, projector assembly 184, and sensor bundle 164 are all performed in relation to the same defined area. In some examples, each of the cameras of sensor bundle 164 (e.g., cameras 164A-164C) may have a slightly different field of view.

Referring now to FIGS. 5-6, device 150 may direct projector assembly 184 to project image(s) onto surface 200, movable surface 210, and/or object(s) disposed on movable surface 210. The image(s) projected by assembly 184 may comprise information and/or images produced by software being executed by device 150.

FIG. 7 is a block diagram of a portion of computing system 100 of FIG. 1. In particular, FIG. 7 illustrates an example of computing device 150 that includes model acquisition engine 170 to acquire a three-dimensional model representing an object (e.g., object 40 disposed on movable surface 210); and communication engine 172 to send the three-dimensional model to another computing system and to receive from the other computing system model manipulation data that may include orientation data, applied image data, or both. Computing device 150 may also include a movement and projection engine 174 to move movable surface 210 in accordance with the received orientation data and/or applied image data, and to project the applied image data onto the object disposed on movable surface 40, as described below. In the example illustrated in FIG. 7, computing device 150 is also communicatively connected to sensor bundle 164 and to movable surface 210, as described above. Although not shown in FIG. 7, computing device 150 may also be communicatively connected to other components of system 100, as described above. Computing device 150 may also be communicatively connected (e.g., wirelessly or electrically coupled) to a network 240 and to any other computing systems (not shown for brevity) connected to network 240. Network 240 may include any combination of wireless and wired networks, such as local area network(s) (LAN), wide area network(s) (WAN), and the like, and may also include computing devices such as routers, gateways, servers, etc., suitable for receiving, processing, and sending data to other computing devices.

Computing device 150 (or any other computing device implementing engines 170, 172, and 174) may include at least one processing resource. In examples described herein, a processing resource may include, for example, one processor or multiple processors included in a single computing device or distributed across multiple computing devices. As used herein, a "processor" may be at least one of a central processing unit (CPU), a semiconductor-based microprocessor, a graphics processing unit (GPU), a field-programmable gate array (FPGA) configured to retrieve and execute instructions, other electronic circuitry suitable for the retrieval and execution instructions stored on a machine-readable storage medium, or a combination thereof.

In examples described herein, any engine(s) of computing device 150 (e.g., engines 170, 172, 174, etc.) may be any combination of hardware and programming to implement the functionalities of the respective engine. Such combinations of hardware and programming may be implemented in a number of different ways. For example, the programming may be processor executable instructions stored on a non-transitory machine-readable storage medium and the hardware may include a processing resource to execute those instructions. In such examples, the machine-readable storage medium may store instructions that, when executed by the processing resource, implement the engines. The machine-readable storage medium storing the instructions may be integrated in the same computing device (e.g., device 150) as the processing resource to execute the instructions, or the machine-readable storage medium may be separate from but accessible to the computing device and the processing resource. The processing resource may comprise one processor or multiple processors included in a single computing device or distributed across multiple computing devices.

In some examples, the instructions can be part of an installation package that, when installed, can be executed by the processing resource to implement the engines of system 100. In such examples, the machine-readable storage medium may be a portable medium, such as a compact disc, DVD, or flash drive, or a memory maintained by a server from which the installation package can be downloaded and installed. In other examples, the instructions may be part of an application or applications already installed on a computing device including the processing resource (e.g., device 150). In such examples, the machine-readable storage medium may include memory such as a hard drive, solid state drive, or the like.

As used herein, a "machine-readable storage medium" may be any electronic, magnetic, optical, or other physical storage apparatus to contain or store information such as executable instructions, data, and the like. For example, any machine-readable storage medium described herein may be any of a storage drive (e.g., a hard drive), flash memory, Random Access Memory (RAM), any type of storage disc (e.g., a compact disc, a DVD, etc.), and the like, or a combination thereof. Further, any machine-readable storage medium described herein may be non-transitory.

Model acquisition engine 170 may acquire three-dimensional model data (hereinafter, "model data") representing a physical object (e.g., object 40) disposed on movable surface 210. In some examples, engine 170 may acquire the model data by generating the model data based on the physical object disposed on movable surface 210. For example, engine 170 may control or configure one or more cameras from sensor bundle 164 to obtain one or more images of the physical object and to send the one or more images to engine 170. Upon receiving the one or more images, engine 170 may generate the model data based on the image(s). For example, engine 170 may generate the model data based on a plurality of (e.g., two or more) images received from a plurality of (e.g., two or more) different cameras of sensor bundle 164. In some examples, the plurality of cameras may be located at a predetermined fixed distance from each other, in which case the plurality of images obtained by the cameras may be stereo images, that is, images of the same physical object taken from different angles. Based at least on the plurality of images (e.g., stereo images) and based on the predetermined fixed distance, engine 170 may generate the three-dimensional model data representing the physical object. In some examples, engine 170 may also determine the distance from the sensor bundle 164 to the physical object (e.g., using depth camera 164C), in which case the generation of the three-dimensional model data may be based also on the determined distance.

In some examples, model acquisition engine 170 may also control or configure movement and projection engine 174 to move (e.g., rotate) movable surface 210 and the physical object placed thereupon, as discussed below, and to obtain, using one or more cameras of sensor bundle 164, a plurality of images of the physical object at different positions and/or orientations. Engine 170 may then generate the three-dimensional model data based on the plurality of images, where different images may represent the physical object in a different position and/or orientation. In some examples, after generating the model data, engine 170 may store the model data, for example, on the machine-readable storage medium.

In some examples, instead or in addition to generating the model data in real time, engine 170 may acquire a previously stored model data, for example, from the machine-readable storage medium, which, as described above, may be integrated in computing device 150 or may be separate from but accessible to computing device 150 (e.g., via network 240). In some examples, the previously stored model data may have been previously generated by computing device 150, as described above. In other examples, the previously stored model data may have been previously generated by another device, using any suitable method for generating a three-dimensional model.

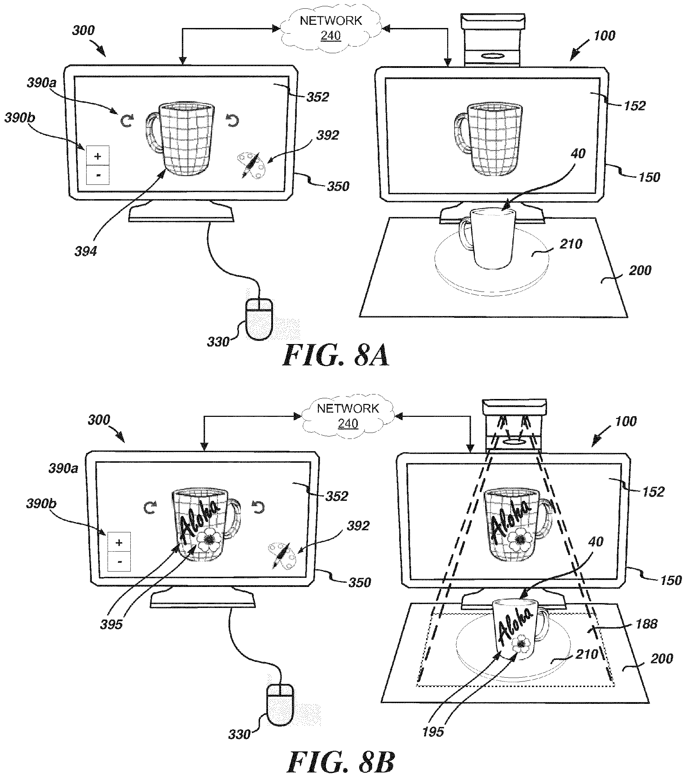

Referring now to FIG. 8A in conjunction with FIG. 7, after acquiring the model data, model acquisition engine 170 may send the model data to communication engine 172, which may then send the model data to another computing system (e.g., computing system 300) through a network 240. In some examples, computing system 300 may be implemented as computing system 100 or as any other computing system capable of implementing the methods described herein. For example, computing system 300 may include a computing device 350, which may be implemented as computing device 150, or as any other computing device suitable for performing the functionality described herein. Computing device 350, after receiving the model data from computing system 100 (e.g., from computing device 150), may display the received model data on a display 352, for example, by rendering on display 362 a two-dimensional perspective view (e.g., view 394) of the three-dimensional model data.

In some examples, the model data sent to computing device 350 may include an object orientation data indicating the current orientation of object 40 disposed on movable surface 210. In such cases, computing device 350 may use the object orientation data to display the received model data on display 352 with a perspective view that corresponds to the current orientation of object 40. For example, as illustrated in FIG. 8A, view 394 corresponds to object 40 in terms of orientation.

In some example, computing system and may receive, from its user, user input to manipulate the model data. In some examples, the user may manipulate the model data by moving, resizing, rotating, or otherwise changing the orientation of the model data, as presented on display 352. This may be achieved, for example, by clicking and dragging (or touching and swiping) the presented model data, by engaging graphical user interface (GUI) widgets such as widgets 390a and 390b with an input device 330, which may be a mouse, a touch-sensitive surface, a finger, a stylus, and the like, or by using any other suitable means.

In some examples, when the user of computing device 350 changes the orientation of the model data as described above, computing device 350 may send to computing system 100 (e.g., through network 240) orientation data based on which computing system 100 may determine the current orientation of the model data as presented on display 352. In some examples, orientation data may describe the current orientation of the model data either in absolute values, or in values relative to the previous orientation. For example, the absolute values may be expressed in terms of angle(s) relative to a fixed axis, and relative values may be expressed in terms of angle(s) by which the user last rotated the model data around its central axis.

Referring now to FIG. 8B, in some examples, the user of device 350 may also manipulate the model data by drawing, painting, applying images or graphics, or otherwise applying imagery (e.g., imagery 395) to the model data. To apply the imagery to the model data, the user may use, for example, input device 330 and any suitable GUI widgets (e.g., widgets selectable from a painting toolbar 392). The user may also move (e.g., rotate) the model data, as described above, which may allow the user to apply imagery on any side or face of the model data.

In some examples, when the user of computing device 350 makes any change to the imagery applied to the model data, computing device 350 may send to computing device 150 (e.g., through network 240) applied image data representing the imagery that has been applied to the model data, including the location(s) on the model data where the imagery is applied. In some examples, applied image data may describe only the differences between the previous applied imagery and the current applied imagery, and may also include the exact location(s) of the differences on the model data.

While in some examples described above, computing device 350 sends to computing device 150 orientation data any time when the orientation of the model data on display 352 changes, in other examples, computing device 350 may send to computing device 150 orientation data and applied image data only when the applied imagery changes. That is, if the orientation of the model changes but the applied imagery remains unchanged, computing device 350 may not send the updated orientation data to computing device 150.

Referring now back to FIG. 7, communication engine 172 of computing device 150 may receive from the other computing system model manipulation data that may include orientation data and/or applied image data, as described above. Communication engine 172 may then send the manipulation data to movement and projection engine 174. Movement and projection engine 174 may determine whether the received manipulation data includes any orientation data and whether the received manipulation data includes any applied image data.

If orientation data is included, engine 174 may move (e.g., rotate) movable surface 210 to cause movable surface 210 and the object disposed thereupon to be oriented in accordance with the orientation data. For example, engine 174 may move movable surface 210 such that the object's orientation (as seen, for example, from a location perpendicular to and at the center of display 152) becomes the same or substantially the same as the orientation of the model data presented on display 352. In some examples, orientation data may specify angle(s) by which movable surface 210 needs to be moved, in which case engine 174 may move movable surface 210 by the specified angle(s). In some examples, orientation data may also specify direction (e.g., clockwise or counterclockwise) by which movable surface 210 needs to be moved, in which case engine 174 may move movable surface 210 by the specified angle(s) in the specified direction.

In some examples, engine 174 may further receive tracking information (e.g. from camera(s) of sensor bundle 164 or from camera 154) identifying the location of the user of computing device 150 (e.g., the user's face). In such cases, engine 174 may move movable surface 210 such that the object's orientation, as seen from the identified user location, becomes the same or substantially the same as the orientation of the model data presented on display 352. In some examples, engine 174 may move movable surface 210 to make the object's orientation (as seen from a location perpendicular and central to display 152 or as seen from the identified user location) be at a predetermined angle (e.g., 30°, 45°, 90°, 180°, 270°, etc.) relative to the orientation of the model data presented on display 352.

In other examples, if the manipulation data does not include orientation data but includes applied image data applied image data, engine 174 may move movable surface 210 based on the applied image data. For example, engine 174 may move movable surface 210 such that the applied image data could be projected by projector assembly 184 to the appropriate portion of the object. For example, in some implementations, due to geometrical constraints, projector assembly 184 may only project on one side of the object (e.g., the side facing or closer to projector assembly 184 or fold mirror 162) and may not be able to project on the other side. In such cases, engine 174 may move movable surface 210 such that the side of the object onto which the applied image data needs to be applied can be projected upon by projector assembly 184.

In some examples, if the received manipulation data includes applied image data, engine 174 may control or configure projector assembly 184 to project the applied image data on the object such that the projected applied image data (e.g., projected applied image data 195), as presented on the object, corresponds to the imagery presented on display 352 (e.g., imagery 395) in terms of location and visual characteristics. In some examples, engine 174 may further control or configure projector assembly 184 to adjust or calibrate the projected applied image data based on the distance and position of the object relative to projector assembly 184, such that the image data as presented on the object is not geometrically distorted.

In some examples, the projection of applied image data may occur after or in parallel to the movement of movable surface 210. As described above, engine 174 may move movable surface 210 based on received orientation data or based on the applied image data, for example, when orientation data is not included in the received manipulation data.

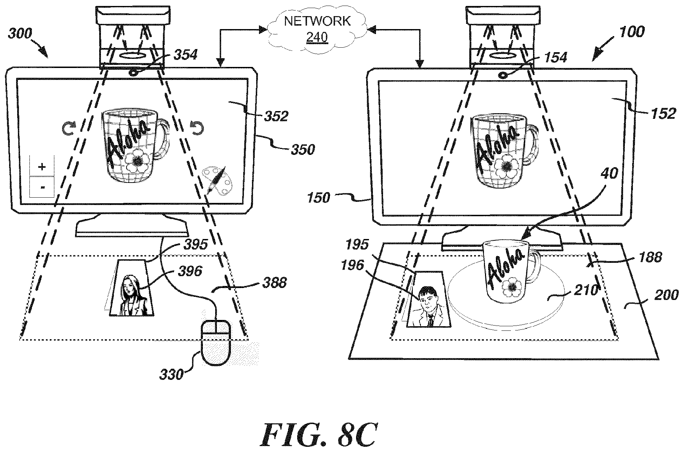

In some examples, computing system may also display, on display 152, the model data as it appears on display 352, to show to the user of computing device 150 how the user of computing device 350 sees and manipulates the model data. In some examples, when engine 174 receives the manipulation data, in addition to moving movable surface 210 and/or projecting imagery onto object 40, as described above, engine 174 may also update the model data appearing on display 152 in accordance with the manipulation data. In other examples, display 152 may not show the model data, and may instead show, for example, a live video of the user of computing device 350 as captured, for example, by a camera included in computing device 350 (e.g., camera 354 illustrated in FIG. 8C).

In some examples, as illustrated in FIG. 8C, computing device 150 may include, in addition to object 40, a second projectable object, such as object 195. Object 195 may be any type of object that may be positioned within project display space 188 and that has at least one surface that can be projected upon by projector assembly 184 and that can be visible by the user of computing device 150. For example, object 195 may be any object having a surface that can be projected upon by projector assembly 184 and that is visible from a location central and perpendicular to display 152 and a predetermined distance (e.g., 2 feet away from display 152. In some examples, object 195 may be wedge-shaped. In some examples, object 195 may be physically coupled to any component(s) of computing device 150, or it can be freely movable by the user of computing device 150. For example, the user may position object 195 anywhere within project display space 188.

In some examples, communication engine 172 may receive from computing device 350 user image data, which may be, for example, a still image or a real-time video stream captured, for example, by camera 354 facing the user of computing device 350. Accordingly, the received user image data may include image data representing the user of computing device 350. Communication engine 172 may send the received image data to movement and projection engine 174. Engine 174 may then project the image data (e.g., image data 196) onto object 195. In some examples, engine 174 or any other engine(s) of computing device 150 may first determine the location of object 195 within project display space 188 and/or the location of a surface of object 195 that is facing away or approximately away from display 152. Engine 174 may then use that information to project the image data onto the determined location of the object and the surface. Projecting image data representing the other user onto an object positioned in close proximity and at approximately the same height as object 40 allows the user of computing device to simultaneously observe object 40, the applied image data projected onto object 40, and the face of the user performing the model data manipulations, without having to move the gaze up toward monitor 152.

Similarly, in some examples, as also illustrated in FIG. 8C, computing system 300 may also include a projector assembly and projectable object, such as object 395. Object 395 may also be any type of object that may be positioned within project display space 388 and that has at least one surface that can be projected upon by the projector assembly and that can be visible by the user of computing device 350. For example, object 395 may be any object having a surface that can be projected upon by the projector assembly and that is visible from a location central and perpendicular to display 352 and a predetermined distance (e.g., 2 feet away from display 352. In some examples, object 395 may also be wedge-shaped. In some examples, object 395 may be physically coupled to any component(s) of computing system 300, or it can be freely movable by the user of computing system 300. For example, the user may position object 395 anywhere within project display space 388.

In some examples, computing device 350 may also receive from computing device 150 (e.g., from its communication engine 172) user image data, which may be, for example, a still image or a real-time video stream captured, for example, by camera 154 facing the user of computing device 150. Accordingly, the received user image data may include image data representing the user of computing device 150. Computing device 350 may then configure a projector that may be include in computing system 300 to project the image data (e.g., image data 396) onto object 395. In some examples, computing device 350 may first determine the location of object 395 within project display space 388 and/or the location of a surface of object 395 that is facing away or approximately away from display 352. Computing device 350 may then use that information to configure the projector to project the image data onto the determined location of the object and the surface.

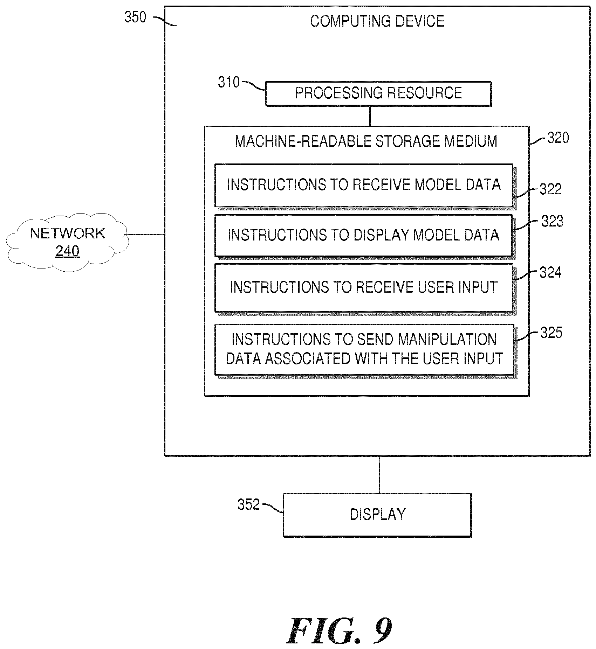

FIG. 9 is a block diagram of an example computing device 350. In the example of FIG. 9, computing device 350 is communicatively connected to display 352, and includes a processing resource 310 and a machine-readable storage medium 320 comprising (e.g., encoded with) instructions 322-325. In some examples, storage medium 320 may include additional instructions. In other examples, instructions 322-325 and any other instructions described herein in relation to storage medium 320, may be stored on a machine-readable storage medium remote from but accessible to computing device 350 and processing resource 310. Processing resource 310 may fetch, decode, and execute instructions stored on storage medium 320 to implement the functionalities described below. In other examples, the functionalities of any of the instructions of storage medium 320 may be implemented in the form of electronic circuitry, in the form of executable instructions encoded on a machine-readable storage medium, or a combination thereof. Machine-readable storage medium 320 may be a non-transitory machine-readable storage medium.

In the example of FIG. 9, instructions 322 may receive three-dimensional model data from another computing system (e.g., computing system 100) that includes a projector (e.g., projector assembly 184) and a movable surface (e.g., movable surface 210), as described above. The three-dimensional model data may be associated with an object (e.g., object 40) placed or disposed on the movable surface, as described above. Instructions 323 may then display the three-dimensional model data on a display (e.g., display 352), as described above. Instructions 324 may receive user input (e.g., via input device 330) associated with the displayed three-dimensional model data. As described above, the user input may request to move, rotate, resize, or otherwise reorient the displayed model data, and/or to apply imagery to the displayed model data. Instructions 325 may send (e.g., via network 240) to the other computing system (e.g., computing system 100) manipulation data. As described above, the manipulation data may include orientation data and/or applied image data, depending on the user input.

In some examples, as part of the three-dimensional model data, instructions 322 may receive object orientation data describing the orientation of the object (e.g., object 40) disposed on the movable surface of the other computing system (e.g., computing system 100). In these examples, instructions 323 may display the three-dimensional model data with a perspective view that corresponds to the orientation of the object. It is appreciated that in some examples, additional instructions may be included to implement additional functionality of computing device 350 discussed above.

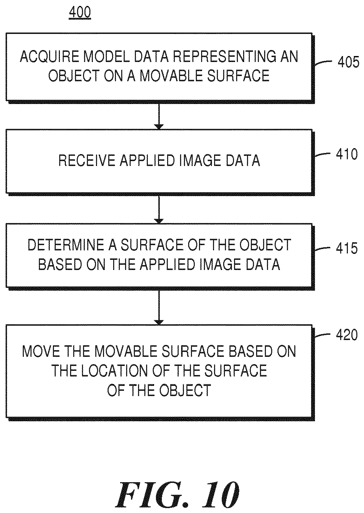

FIG. 10 is a flowchart of an example method 400. Although execution of method 400is described below with reference to computing system 100 described above, other suitable systems for execution of method 400 can be utilized. Additionally, it is appreciated that implementation of method 400 is not limited to such examples.

At block 405, method 400 may acquire model data representing an object (e.g., object 40) disposed on a movable surface (e.g., movable surface 210), as described above. For example, the method may obtain at least a first image (e.g., via at least one camera of sensor bundle 164) representing the object in a first orientation and generate the model data based at least on the first image. The method may also move the movable surface to put the object in another orientation, to obtain at least a second image (e.g., via at least one camera of sensor bundle 164) representing the object in the other orientation, and to generate the model data based at least on the first and the second images.

At block 410, the method may receive (e.g., by computing system 100 from computing system 300) manipulation data that includes at least applied image data associated with at least one surface of the model data. As described above, the user of computing system 300 may apply imagery to any surface, face, or side of the model data. At block 415, the method may determine a surface of the object (e.g., object 40) that corresponds to the surface of the model data associated with the applied image data. That is, the method may determine which side of the object the applied image data should be applied to. The method may determine this, for example, by capturing one or more images of the object (e.g., via one or more cameras of sensor bundle 164) and determining, based on the image(s), which surface of the object corresponds to the surface of the model data to which applied image data has been applied.

At block 420, the method may move the movable surface based on the location of the surface of the object determined at block 415. For example, the method may move the movable surface such as to cause the determined surface of the object face a user and/or face away from a display (e.g., display 152), as described above. As described above, after or in parallel to moving the movable surface, the method may project the applied image data onto the surface of the object determined at block 415.

Although the flowchart of FIG. 10 shows a specific order of performance of certain functionalities, method 400 is not limited to that order. For example, the functionalities shown in succession in the flowchart may be performed in a different order, may be executed concurrently or with partial concurrence, or a combination thereof. In addition, some functionalities may be omitted from and/or added to method 400. In some examples, features and functionalities described herein in relation to FIG. 10 may be provided in combination with features and functionalities described herein in relation to any of FIGS. 1-9.

## Claims

1. A computing system comprising:
a movable surface;
a model acquisition engine to acquire three-dimensional model data representing a first object disposed on the movable surface;
a communication engine to send the model data to another computing system and to receive, from the other computing system, manipulation data associated with the model data; and
a movement and projection engine to move the movable surface in accordance with the received manipulation data.

2. The computing system of claim 1, wherein the manipulation data comprises orientation data associated with an input by a user of the other computing system, and wherein the movement and projection engine is to move the movable surface based on the orientation data.

3. The computing system of claim 2, wherein:
the movable surface comprises a turn table;
the orientation data comprises an angle; and
the movement and projection engine is to rotate the turn table based on the angle.

4. The computing system of claim 1, wherein the manipulation data comprises applied image data associated with an input by a user of the other computing system, and wherein the movement and projection engine is to move the movable surface based on the applied image data.

5. The computing system of claim 1, further comprising a projector, wherein:
the manipulation data comprises applied image data associated with an input by a user of the other computing system;
the projector is to project the applied image data onto the first object.

6. The computing system of claim 5, further comprising a second object, wherein the communication engine is further to receive from the other computing system user image data, and to display the user image data on the second object.

7. The computing system of claim 1, further comprising a camera to capture at least one image representing the first object, wherein the model acquisition engine is to acquire the three-dimensional model data based at least on the image.

8. A method comprising:
acquiring model data representing an object disposed on a movable surface;
receiving manipulation data comprising at least applied image data associated with a surface of the model data;
determining a surface of the object that corresponds to the surface of the model data; and
moving the movable surface based at least on a location of the surface of the object.

9. The method of claim 8, further comprising:
projecting the applied image data onto the surface of the object.

10. The method of claim 8, wherein moving the movable surface is performed by a first computing system, and wherein receiving the manipulation data comprises receiving the manipulation data by the first computing system from a second computing system.

11. The method of claim 8, wherein moving the movable surface comprises moving the movable surface to cause the surface of the object face a user.

12. The method of claim 8, further comprising obtaining a first image representing the object, wherein acquiring the model data comprises generating the model data based at least on the first image.

13. The method of claim 12, wherein the first image represents the object in a first orientation, the method further comprising moving the movable surface to put the object in a second orientation and obtaining a second image representing the object in the second orientation.
